# EUROPÄISCHE PATENTANMELDUNG

(11) **EP 3 098 563 A2**
(43) Veröffentlichungstag der Anmeldung: **30.11.2016**
(21) Anmeldenummer: 16171601.4
(22) Anmeldetag: 26.05.2016
(51) Int. Cl.: G01C 11/02

(54) **SYSTEM UND VERFAHREN ZUR ERFASSUNG VON BILDDATEN EINER OBERFLÄCHE EINES OBJEKTS**

(30) Priorität: 29.05.2015 DE 202015102791 U
(71) Anmelder: Kreuzhermes, Nikolaus, 49835 Wietmarschen (DE)
(72) Erfinder: Kreuzhermes, Nikolaus, 49835 Wietmarschen (DE)
(74) Vertreter: Werner & ten Brink

(57) **Zusammenfassung**

Die Neuerung ist ein System und ein Verfahren zur Erfassung von Bilddaten einer Oberfläche eines Objekts (12) und ein Kamerasystem (10) zur Verwendung in einem solchen System, wobei mittels eines Computersystems (18) eine Kombination von Digitalbildern (16), welche von dem Objekt (12) aufgenommen wurden, anhand einer mittels des Kamerasystems (10) auf das Objekt (12) projizierten und in den Digitalbildern (16) erfassten Signatur (32, 34) erfolgt.

## Beschreibung

Die Erfindung betrifft ein System zur Erfassung von Bilddaten einer Oberfläche eines Objekts sowie ein Verfahren zum Betrieb eines solchen Systems. Das System umfasst einerseits ein mobiles Kamerasystem, das zum Aufnehmen der Bilddaten zum Ort des jeweiligen Objekts gebracht werden kann, und andererseits ein Computersystem, das die aufgenommenen Bilddaten, nämlich eine Mehrzahl von Digitalbildern, zu einer zwei- oder dreidimensionalen Darstellung des Objekts kombiniert. Im Weiteren betrifft die Erfindung auch ein zur Verwendung in einem solchen System bestimmtes Kamerasystem sowie ein zur Verwendung in einem solchen System bestimmtes Computersystem.

Eine Kombination von Digitalbildern, also ein positionsrichtiges Aneinanderfügen von Digitalbildern zum Erhalt einer Gesamtansicht des jeweiligen Objekts, ist aufwändig und erfordert in erheblichem Umfang Bedienereingriffe, wenn nicht sogar das positionsrichtige Kombinieren einzelner Digitalbilder ohnehin ein rein manueller Arbeitsschritt ist.

Je weniger markante Konturen die einzelnen Digitalbilder aufweisen, desto problematischer ist ein automatisches positionsrichtiges Aneinanderfügen einzelner Digitalbilder. Bei technischen Gegenständen, für deren technische Inspektion es auf eine Analyse von deren Oberflächen ankommt, ergibt sich häufig die Situation, dass Digitalbilder, die jeweils Abschnitte solcher Oberflächen zeigen, überhaupt keine zum automatischen positionsrichtigen Aneinanderfügen verwertbare Konturen oder Bilddetails aufweisen. Das Kombinieren solcher Bilder zu einer Gesamtdarstellung, insbesondere einer zwei- oder dreidimensionalen Darstellung des Objekts, ist damit reine Handarbeit und zudem sehr zeitaufwändig und fehleranfällig.

Ausgehend davon besteht eine Aufgabe der hier vorgeschlagenen Neuerung darin, ein System mit einem Kamerasystem und einem Computersystem sowie ein in einem solchen System verwendbares Kamerasystem anzugeben, das auch bei Digitalbildern ohne besonders prominente Konturen oder Details ein automatisches positionsrichtiges Aneinanderfügen erlaubt.

Diese Aufgabe wird erfindungsgemäß mittels eines Systems zur Erfassung und späteren Darstellung von Bilddaten einer Oberfläche eines Objekts mit den Merkmalen des Anspruchs 1 gelöst. Die aufgezeichneten Bilddaten und damit das System, mittels dessen diese aufgezeichnet und dargestellt werden, dienen zur Oberflächeninspektion des jeweiligen Objekts. Bei dem Objekt handelt es sich zum Beispiel um einen Turm oder ein Rotorblatt einer Windkraftanlage oder um eine Trag- oder Stützkonstruktion einer technischen Anlage, zum Beispiel einer Bohrplattform für den Offshore-Einsatz.

Die Neuerung ist ein System zur Erfassung von Bilddaten einer Oberfläche eines Objekts, also zum Beispiel eines Rotorblatts einer Windkraftanlage oder dergleichen (siehe oben), und ein Kamerasystem zur Verwendung in einem solchen System. Mittels eines Computersystems erfolgt eine Kombination von digitalen Kamerabildern (Digitalbildern), welche mittels des Kamerasystems von dem jeweiligen Objekt aufgenommen wurden. Die Kombination der Digitalbilder erfolgt anhand einer mittels des Kamerasystems auf das Objekt aufgebrachten, insbesondere auf das Objekt projizierten und in den Digitalbildern erfassten Signatur.

Das System umfasst ein Kamerasystem und ein Computersystem. Das Kamerasystem ist ein mobiles Kamerasystem und wird zum Aufzeichnen der Bilddaten des jeweiligen Objekts an den Ort, an dem sich das Objekt befindet, gebracht. Das Computersystem ist üblicherweise - aber nicht notwendig - stationär installiert. Mittels des Kamerasystems sind am Ort des Objekts von diesem Bilddaten in Form einer Mehrzahl einzelner Digitalbilder aufnehmbar und beim Betrieb des Kamerasystems wird von dem Objekt eine Mehrzahl einzelner Digitalbilder aufgenommen. Mittels des Computersystems sind die mittels des Kamerasystems aufgezeichneten Bilddaten zu einer zwei- oder dreidimensionalen Darstellung des Objekts kombinierbar und werden beim Betrieb des Computersystems zu einer zwei-oder dreidimensionalen Darstellung des Objekts kombiniert. Der Begriff Digitalbild ist dabei weit auszulegen. Für die hier vorgestellte Neuerung kommt es auf die Art der bildgebenden Sensorik des Kamerasystems nicht an. Mittels des jeweiligen Bildsensors des Kamerasystems können demnach Bilder im sichtbaren Frequenzbereich genauso wie Bilder im Infrarotbereich, insbesondere im mittleren und langwelligen Infrarotbereich, im Frequenzbereich der Röntgenstrahlung usw. aufgezeichnet werden. Jedes dabei jeweils resultierende Bild wird als Digitalbild verstanden und entsprechend ist der Begriff auszulegen. Insofern ist ein bei einer Thermographie entstehendes Bild eine besondere Variante eines Digitalbilds und ein Thermographiebild ist ein Abbild der Wärmestrahlung des Objekts an dessen Oberfläche.

Die Neuerung zeichnet sich dadurch aus, dass die einzelnen Digitalbilder mittels des Kamerasystems mit einer Positionsinformation, nämlich mit einer optischen Positionsinformation, kombinierbar sind und kombiniert werden und dass die optische Positionsinformation mittels des Computersystems beim Kombinieren der Digitalbilder zum Erhalt einer zwei- oder dreidimensionalen Darstellung des Objekts auswertbar ist und ausgewertet wird. Das Kombinieren der einzelnen Digitalbilder mit einer optischen Positionsinformation erfolgt mittels einer von dem Kamerasystem umfassten Strahlquelle, indem mittels der Strahlquelle auf eine Oberfläche des Objekts als optische Positionsinformation temporär eine Signatur aufgebracht wird, zum Beispiel indem die Signatur auf die Oberfläche projiziert wird.

Das Kamerasystem umfasst dafür zumindest eine Strahlquelle, mittels welcher auf eine Oberfläche des Objekts temporär eine Signatur aufbringbar ist, insbesondere auf das Objekt projizierbar ist, und beim Betrieb des Kamerasystems und der Strahlquelle auf das Objekt aufgebracht wird, insbesondere auf das Objekt projiziert wird. Beim Aufnehmen von Bilddaten des Objekts ist jeweils zumindest ein Teil einer solchen als optische Positionsinformation fungierenden Signatur mittels des Kamerasystems erfassbar und wird beim Betrieb des Kamerasystems als Bestandteil der jeweils aufgenommenen Bilddaten erfasst. Indem die Signatur zusammen mit dem jeweils erfassten Oberflächenabschnitt des Objekts mittels des Kamerasystems aufgenommen wird, sind die resultierenden einzelnen Digitalbilder jeweils mittels des Kamerasystems mit einer optischen Positionsinformation kombinierbar und werden beim Betrieb des Kamerasystems mit einer solchen optischen Positionsinformation kombiniert. Beim Aufnehmen von Bilddaten in Form einer Mehrzahl von Digitalbildern von der Oberfläche des Objekts umfassen diese demnach die Signatur, genauer gesagt umfasst jedes einzelne Digitalbild zumindest einen Teil der Signatur. Der in jedem Digitalbild enthaltene Teil der Signatur ist umgekehrt ein Abschnitt der insgesamt auf die Oberfläche des Objekts projizierten Signatur und der jeweils in einem Digitalbild erfasste Abschnitt der Signatur fungiert für das jeweilige Digitalbild als optische Positionsinformation. Diese optische Positionsinformation ist wiederum mittels des Computersystems für das Kombinieren der Digitalbilder zu einer zwei- oder dreidimensionalen Darstellung des Objekts auswertbar und wird mittels des Computersystems zum Zwecke einer solchen Kombination ausgewertet. Die Kombination erfolgt dabei kurz gefasst in einer Art und Weise, dass sich in den kombinierten Digitalbildern wieder die ursprünglich auf die Oberfläche des Objekts aufgebrachte Signatur ergibt. Die mittels des Computersystems generierte zwei- oder dreidimensionale Darstellung des Objekts erlaubt die Untersuchung großer Oberflächenabschnitte des jeweils untersuchten Objekts in einem räumlichen Zusammenhang.

Ob die kombinierten Digitalbilder dabei die gesamte ursprünglich auf die Oberfläche des Objekts aufgebrachte Signatur umfassen, hängt auch davon ab, ob alle aufgenommenen Digitalbilder brauchbar sind und ob mittels der aufgenommenen Digitalbilder die gesamte mittels der Signatur erfasste Oberfläche des jeweiligen Objekts erfasst ist. Die Formulierung, wonach sich "in den kombinierten Digitalbildern wieder die ursprünglich auf die Oberfläche des Objekts aufgebrachte Signatur ergibt", ist also nicht so auszulegen, dass die kombinierten Digitalbilder in jedem Fall die gesamte ursprünglich auf die Oberfläche des Objekts aufgebrachte Signatur umfassen.

Der Vorteil der Verwendung einer solchen Signatur oder jeweils eines Teils einer solchen Signatur als optische Positionsinformation besteht darin, dass diese auch bei Kamerasystemen, welche die einzelnen Digitalbilder mit einer hohen Geschwindigkeit (zum Beispiel 700 Aufnahmen pro Sekunde) aufnehmen, noch unterscheidbare Ergebnisse liefert.

Bei einem Vergleich mit einer aufgrund eines GPS-Empfängers resultierenden Positionsinformation (numerische Positionsinformation) wäre allein aufgrund der Zykluszeit, innerhalb derer mittels des GPS-Empfängers keine aktualisierte Positionsinformation erhältlich ist, eine Vielzahl der Digitalbilder mit derselben Positionsinformation versehen, so dass die angestrebte Unterscheidbarkeit der Positionsinformationen, auf deren Basis mittels des Computersystems die Kombination der Digitalbilder zu einer zwei- oder dreidimensionalen Darstellung des Objekts erfolgen soll, gerade nicht gegeben wäre. Die Projektion einer Signatur auf das jeweilige Objekt hat zudem den Vorteil, dass die damit einhergehende optische Positionsinformation unmittelbar den jeweils erfassten Bildinhalt von anderen Bildinhalten unterscheidbar macht, denn bei bestimmten Objekten, zum Beispiel einem Rotorblatt einer Windkraftanlage, liefern aufgrund einer weitgehend gleichförmigen Oberflächenstruktur die Bildinformationen der einzelnen Digitalbilder selbst keinen Anhalt in Bezug auf eine eventuelle Zusammengehörigkeit. Durch Verwendung der optischen Positionsinformation ist eine positionsrichtige Kombination eines Digitalbilds mit anderen Digitalbildern möglich, sobald zwei oder mehr Digitalbilder gleiche Abschnitte der jeweiligen Signatur umfassen.

Der Vorteil der hier vorgeschlagenen Neuerung besteht damit darin, dass mittels der von den einzelnen Digitalbildern jeweils umfassten optischen Positionsinformation eine automatische Kombination der von dem Objekt aufgenommenen Digitalbilder zu einer zwei- oder dreidimensionalen Darstellung des Objekts möglich ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Die nachfolgenden Ausführungsformen des ein Kamerasystem zum Aufnehmen von Digitalbildern und ein Computersystem zum späteren Kombinieren der Digitalbilder umfassenden Systems beziehen sich auf das Kamerasystem des Gesamtsystems. Die speziellen Ausführungsformen des Kamerasystems sind damit auch vom Gesamtsystem unabhängige Neuerungen und kommen für einen vom Gesamtsystem unabhängigen Schutz in Betracht. Entsprechend ist im Folgenden bei einer Erläuterung einer besonderen Ausführungsform des Kamerasystems als Bestandteil des Gesamtsystems stets das Kamerasystem als eigenständige und vom Gesamtsystem unabhängige Einheit mitzulesen.

Bei einer besonderen Ausführungsform eines Systems/Kamerasystems, bei der die optische Positionsinformation auf einer auf das jeweilige Objekt aufgebrachten, insbesondere auf einer auf das Objekt projizierten Signatur basiert, ist mittels eines mittels der Strahlquelle im Betrieb ausgesandten Strahls, zum Beispiel eines Laserstrahls, die Oberfläche des Objekts am Auftreffpunkt des Strahls lokal erwärmbar und wird mittels des Strahls lokal erwärmt. Jeweils zumindest ein Teil einer solchen Signatur ist beim Aufnehmen von Bilddaten des Objekts im Infrarotbereich erfassbar und wird bei einem derartigen Aufnehmen von Bilddaten erfasst. Damit wird auch eine zwei- oder dreidimensionale Darstellung des Objekts in Form einer Kombination von Infrarotbildern möglich. Solche Infrarotbilder sind für eine thermographische Inspektion des jeweiligen Objekts notwendig.

Bei einer weiteren Ausführungsform eines Systems/Kamerasystems, bei der die Positionsinformation auf einer auf das jeweilige Objekt aufgebrachten, insbesondere auf einer auf das Objekt projizierten Signatur basiert, ist die oder jede Strahlquelle am Kamerasystem zum Erhalt einer die Oberfläche des Objekts großflächig erfassenden Signatur beweglich angeordnet und wird beim Betrieb des Kamerasystems während der Aufnahme der Digitalbilder entsprechend einem vorgegebenen oder vorgebbaren Bewegungsmuster sowie einer zugrundeliegenden Steuerungsfunktion oder einem zugrundeliegenden Algorithmus bewegt. Bei einer besonderen Ausführungsform ist die oder jede Strahlquelle schwenkbeweglich am Kamerasystem angeordnet. Die Schwenkbeweglichkeit erlaubt ein Aufbringen, insbesondere Projizieren der Signatur auf große Flächenabschnitte des jeweiligen Objekts, indem die jeweilige Strahlquelle alternierend entlang zumindest einer Ebene, also zum Beispiel aufwärts und abwärts oder seitwärts, oder alternierend entlang einer ersten und/oder zumindest einer weiteren darauf senkrecht stehenden Ebene verschwenkt wird. Im Rahmen eines als Grundlage für solche Bewegungen vorgegebenen oder vorgebbaren Bewegungsmusters können zum Beispiel eine Amplitude und/oder eine Frequenz der Schwenkbewegung definiert sein oder werden.

Bei einer nochmals weiteren Ausführungsform eines Systems/Kamerasystems, bei der die Positionsinformation auf einer auf das jeweilige Objekt aufgebrachten, insbesondere auf einer auf das Objekt projizierten Signatur basiert, ist die oder jede beweglich am Kamerasystem angeordnete Strahlquelle beim Betrieb des Kamerasystems auf Basis eines Zufallsgenerators beweglich, insbesondere schwenkbeweglich zum Beispiel in einer Ebene oder zwei Ebenen schwenkbeweglich. Die Bewegung der Strahlquelle auf Basis eines zum Beispiel eine momentane Amplitude und/oder eine momentane Frequenz einer Schwenkbewegung bestimmenden Zufallsgenerators erzeugt eine unverwechselbare Signatur auf der Oberfläche des jeweiligen Objekts. Bei einer unverwechselbaren Signatur ist das automatische positionsrichtige Kombinieren von Digitalbildern, die Teile solcher Signaturen enthalten, leichter. Zumindest ist gewährleistet, dass nur zulässige und damit korrekte Kombinationen von Digitalbildern die Basis für die schließlich angestrebte zwei- oder dreidimensionale Darstellung des Objekts bilden.

Zusätzlich oder alternativ zu einer Ausführungsform des Systems/Kamerasystems, bei der die Positionsinformation auf einer auf das jeweilige Objekt aufgebrachten, insbesondere auf einer auf das Objekt projizierten und/oder nach einem Zufallsprinzip generierten Signatur basiert, ist vorgesehen, dass das Kamerasystem zumindest zwei unabhängige Strahlquellen, insbesondere zwei unabhängig bewegliche, zum Beispiel in der oben skizzierten Art schwenkbewegliche Strahlquellen, umfasst, wobei mittels jeder Strahlquelle temporär eine eigene Signatur auf der Oberfläche des Objekts aufbringbar ist. Die auf diese Weise auf die Oberfläche des Objekts aufgebrachten, insbesondere auf einer auf das Objekt projizierten zumindest zwei Signaturen stellen für die spätere positionsrichtige Kombination einzelner Digitalbilder eine gemeinsame Signatur (Gesamtsignatur) dar. Weil jede Signatur mittels einer eigenen Strahlquelle auf die Oberfläche des Objekts projiziert wird, ergibt sich als Bestandteil der aufgenommenen Digitalbilder eine unverwechselbare oder zumindest im Wesentlichen unverwechselbare Gesamtsignatur.

Bei einer besonderen Ausführungsform des Systems/des Kamerasystems umfasst das Kamerasystem eine Positionserfassungsvorrichtung. Mittels der Positionserfassungsvorrichtung ist eine zur Unterscheidung als numerische Positionsinformation bezeichnete Positionsinformation erhältlich, die zumindest eine jeweilige Position des Kamerasystems beim Aufnehmen der einzelnen Digitalbilder kodiert (Aufnahmeposition). Mittels des Kamerasystems sind die einzelnen Digitalbilder jeweils mit einer solchen numerischen Positionsinformation kombinierbar und werden beim Betrieb des Kamerasystems mit einer solchen numerischen Positionsinformation kombiniert. Die numerischen Positionsinformationen der einzelnen Digitalbilder erlauben bereits in gewissem Umfang deren Kombination zu einer zwei- oder dreidimensionalen Darstellung des jeweiligen Objekts. Zumindest erlauben die numerischen Positionsinformationen eine Plausibilitätskontrolle zweier anhand von optischen Positionsinformationen als zusammengehörig ermittelter Digitalbilder und/oder eine Einschränkung des Suchraums beim Suchen von aufgrund optischer Positionsinformationen zusammengehöriger Digitalbilder.

Bei einer weiteren Ausführungsform des Systems/des Kamerasystems ist als numerische Positionsinformation zusätzlich zur Aufnahmeposition eine einen Abstand zwischen dem Kamerasystem und einem jeweils erfassten Oberflächenabschnitt des Objekts kodierende Abstandsinformation und/oder ein Winkel, unter dem die Aufnahme eines Digitalbilds des jeweils erfassten Oberflächenabschnitts erfolgt, erfassbar. Diese Daten werden beim Betrieb des Kamerasystems erfasst, sind mit jedem einzelnen Digitalbild kombinierbar und werden beim Betrieb des Kamerasystems mit jedem einzelnen Digitalbild kombiniert. Indem der Abstand zwischen dem Kamerasystem und einem jeweils erfassten Oberflächenabschnitt und/oder ein Winkel, unter dem die Aufnahme des jeweiligen Digitalbilds erfolgt, erfassbar sind und erfasst werden, ergeben sich größere Freiheiten bei der Bewegung des Kamerasystems und die numerischen Positionsinformationen erlauben eine spätere Korrektur der aufgenommenen Digitalbilder. Das Kamerasystem kann zum Beispiel an einem bemannten Luftfahrzeug, zum Beispiel einem Hubschrauber, oder einem unbemannten Luftfahrzeug, zum Beispiel einer sogenannten Drohne, angebracht sein. Ein Beispiel für ein unbemanntes Luftfahrzeug ist ein sogenannter Quadrokopter. Die resultierenden numerischen Positionsinformationen der einzelnen Digitalbilder erlauben ebenfalls bereits in gewissem Umfang deren Kombination zu einer zwei- oder dreidimensionalen Darstellung des jeweiligen Objekts. Auch diese numerischen Positionsinformationen erlauben eine Plausibilitätskontrolle zweier anhand von optischen Positionsinformationen als zusammengehörig ermittelter Digitalbilder und/oder eine Einschränkung des Suchraums beim Suchen von aufgrund optischer Positionsinformationen zusammengehörigen Digitalbildern.

Bei einer besonderen Ausführungsform des Systems/des Kamerasystems umfasst das Kamerasystem zum Erhalt der Abstandsinformation und des Winkels zumindest drei beabstandet voneinander angeordnete Abstandssensoren, wobei die zumindest drei Abstandssensoren am Kamerasystem so angeordnet sind, dass zumindest einer der Abstandssensoren einen Abstand von einer zwei Abstandssensoren miteinander verbindenden gedachten Linie aufweist. Bei einer solchen Positionierung der Abstandssensoren ist selbst dann, wenn das Kamerasystem entlang der gedachten Linie, welche zwei der Abstandssensoren miteinander verbindet, geschwenkt wird, sichergestellt, dass mittels des zumindest einen weiteren (dritten) Abstandssensors eine Abstandsinformation erhältlich ist, die zusammen mit der Abstandinformation der beiden anderen Abstandssensoren die Ermittlung eines Winkels, unter dem die Aufnahme erfolgt, erlaubt.

Die oben genannte Aufgabe wird auch mittels eines Verfahrens mit den Merkmalen des parallelen Verfahrensanspruchs gelöst. Dazu ist bei einem Verfahren zum Betrieb eines Systems/Kamerasystems der hier und im Folgenden beschriebenen Art Folgendes vorgesehen: Mittels der zumindest einen Strahlquelle des Kamerasystems wird temporär auf eine Oberfläche des Objekts eine Signatur aufgebacht. Jeweils zumindest ein Teil der Signatur wird beim Aufnehmen von Bilddaten des Objekts mittels des Kamerasystems erfasst und Bestandteil eines aufgenommenen Digitalbilds. Ein von einem Digitalbild umfasster Abschnitt der Signatur fungiert für das jeweilige Digitalbild als optische Positionsinformation oder als Teil einer optischen Positionsinformation. Die optische Positionsinformation wird mittels des Computersystems beim Kombinieren der Digitalbilder zu einer zwei- oder dreidimensionalen Darstellung des Objekts ausgewertet, indem mittels des Computersystems ein in einem Digitalbild enthaltener Abschnitt der Signatur oder ein Teil des in dem jeweiligen Digitalbild enthaltenen Abschnitts der Signatur mit Abschnitten der Signatur oder Teilen eines Abschnitts der Signatur in anderen Digitalbildern verglichen wird und bei einer Übereinstimmung die betreffenden Digitalbilder kombiniert werden.

Die Erfindung ist bevorzugt in Software implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch ein Kamerasystem und ein Computersystem, in dessen bzw. in deren Speicher als Mittel zur Durchführung des Verfahrens und seiner Ausgestaltungen jeweils ein solches als Mittel zur Ausführung des Verfahrens fungierendes Computerprogramm geladen oder ladbar ist.

Das Verfahren und dessen im Folgenden beschriebene spezielle Ausführungsformen ist bzw. sind zur automatischen Ausführung in Form eines Computerprogramms oder mehrerer Computerprogramme - einzeln und zusammen als Computerprogramm bezeichnet - realisiert. Eines der Computerprogramme ist zur Ausführung durch das Kamerasystem bestimmt. Ein weiteres Computerprogramm ist zur Ausführung durch das Computersystem bestimmt. Beide umfassen dafür grundsätzlich an sich bekannte Mittel, nämlich einen Speicher, in den das Computerprogramm ladbar und im Betrieb geladen ist, sowie eine Verarbeitungseinheit in Form von oder nach Art eines Mikroprozessors. Wenn im Folgenden Verfahrensschritte oder Verfahrensschrittfolgen beschrieben werden, bezieht sich dies auf Aktionen, die aufgrund eines der Computerprogramme oder unter Kontrolle eines der Computerprogramme erfolgen, sofern nicht ausdrücklich darauf hingewiesen ist, dass einzelne Aktionen durch einen Benutzer veranlasst werden. Zumindest bedeutet jede Verwendung des Begriffs "automatisch", dass die betreffende Aktion aufgrund eines Computerprogramms oder unter Kontrolle eines Computerprogramms erfolgt.

Die mit der Anmeldung eingereichten Schutzansprüche sind Formulierungsvorschläge ohne Präjudiz für die Erzielung weitergehenden Schutzes. Da speziell die Gegenstände der Unteransprüche im Hinblick auf den Stand der Technik am Prioritätstag eigene und unabhängige Erfindungen bilden können, behält der Anmelder sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Vielmehr sind im Rahmen der vorliegenden Offenbarung durchaus auch Änderungen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

### Es zeigen

- Fig. 1: ein einen Oberflächenabschnitt eines zu inspizierenden Objekts erfassendes Kamerasystem,
- Fig. 2: das Kamerasystem aus Fig. 1 in einer Ansicht von vorne,
- Fig. 3: das Kamerasystem aus Fig. 1 beim Erfassen eines Oberflächenabschnitts des Objekts unter einem Winkel,
- Fig. 4: das Kamerasystem aus Fig. 1 beim Erfassen eines großflächigen Objekts,
- Fig. 5: eine Mehrzahl von Datensätzen, wie sie mittels des Kamerasystems beim Erfassen des jeweiligen Objekts generiert werden,
- Fig. 6: ein Gesamtsystem zum Erhalt einer computergenerierten Darstellung des inspizierten Objekts mit einem Kamerasystem zur Aufnahme von Digitalbildern und einem Computersystem zum positionsrichtigen Kombinieren der aufgenommenen Digitalbilder,
- Fig. 7: eine alternative Ausführungsform des Kamerasystems,
- Fig. 8: das Kamerasystem aus Fig. 7 beim Erfassen eines Oberflächenabschnitts eines Objekts,
- Fig. 9: einzelne mittels eines Kamerasystems gemäß Fig. 7 und Fig. 8 aufgenommene Digitalbilder,
- Fig. 10: eine positionsrichtige Kombination der Digitalbilder gemäß Fig. 9 und
- Fig. 11: ein exemplarisches Anwendungsszenario der Neuerung.

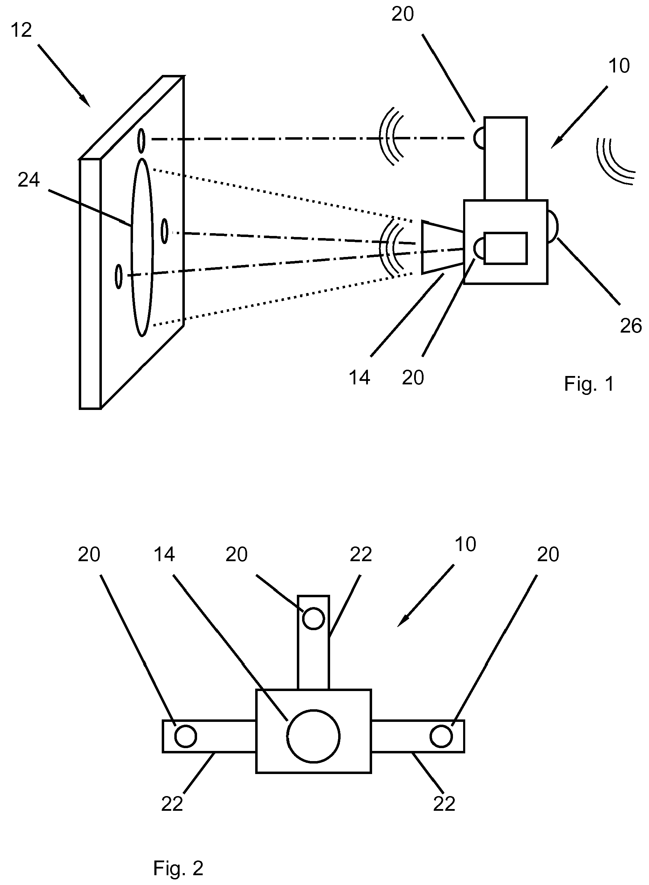

Die Darstellung in **Figur 1** zeigt in schematisch vereinfachter Art und Weise ein Kamerasystem 10 zur Erfassung der Oberfläche eines grundsätzlich beliebigen Objekts 12. In der Darstellung in **Figur 2** ist das Kamerasystem 10 in einer schematisch vereinfachten Ansicht von vorne gezeigt.

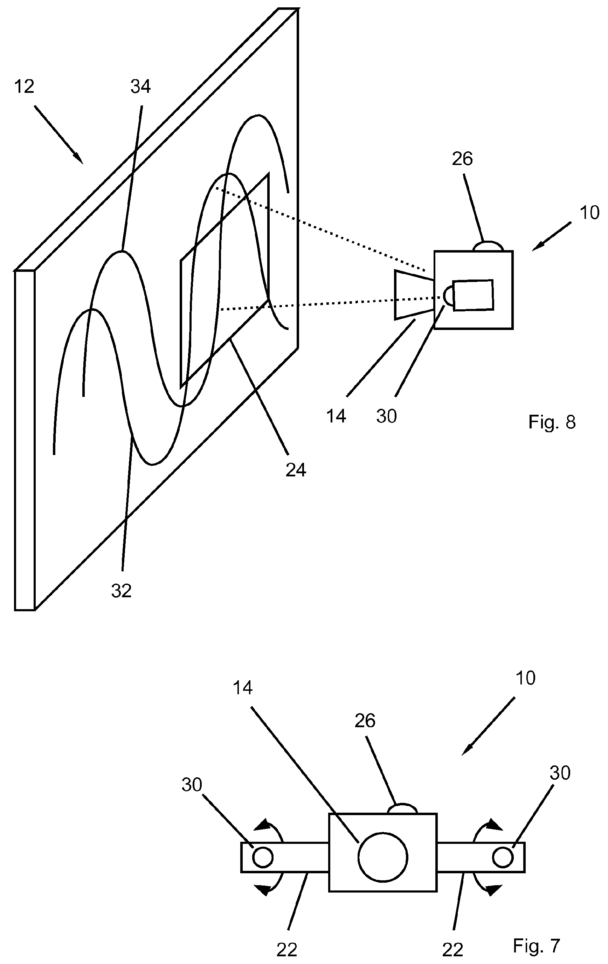

Das Kamerasystem 10 umfasst eine grundsätzlich an sich bekannte und daher hier nicht im Detail gezeigte Optik 14 mit Linsen und einem anschließenden Bildsensor. Mittels des Bildsensors entstehen in an sich bekannter Art und Weise beim Aufnehmen des jeweiligen Objekts 12 Digitalbilder 16 (Fig. 8) des Objekts 12. Über die Optik 14 hinaus umfasst das Kamerasystem 10 zumindest drei von der Optik 14 beabstandet angeordnete Abstandssensoren 20. Die zumindest drei Abstandssensoren 20 sind so angeordnet, dass zumindest einer der Abstandssensoren 20 einen Abstand von einer gedachten, zwei Abstandssensoren 20 miteinander verbindenden Linie aufweist. Bei der in der Darstellung in Figur 2 gezeigten Ausführungsform liegen zum Beispiel die beiden an den horizontalen Auslegern 22 angeordneten Abstandssensoren 20 auf einer gedachten Linie, während der an dem vertikalen Ausleger 22 angeordnete Abstandssensor 20 von dieser Linie beabstandet ist.

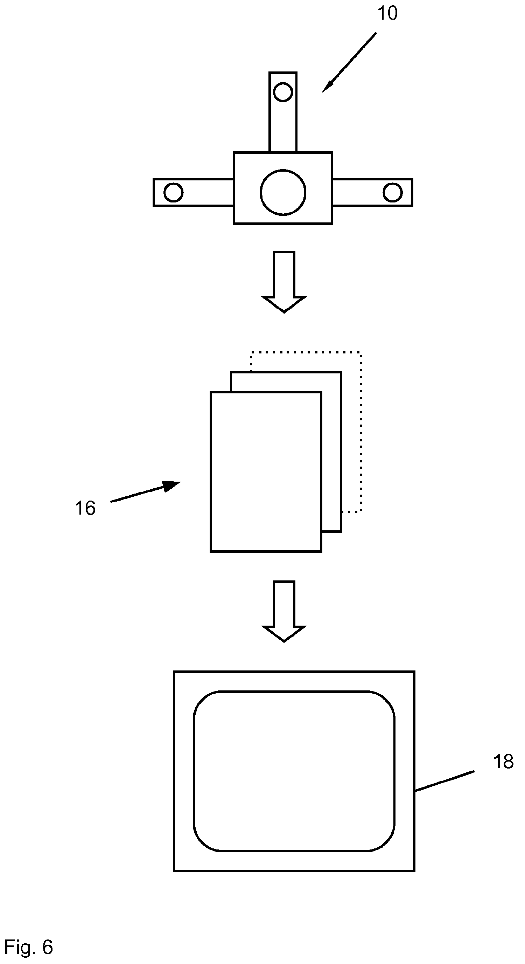

Mittels der Optik 14 des Kamerasystems 10 erfolgt in an sich bekannter Art und Weise eine Aufnahme von Oberflächenabschnitten 24 des jeweiligen Objekts 12. Die resultierenden Digitalbilder 16 der Oberflächenabschnitte 24 sollen entsprechend der tatsächlichen Position der jeweiligen Oberflächenabschnitte 24 auf dem Objekt 12 mittels eines Computersystems 18 (Fig. 6) zu einer zwei- oder dreidimensionalen Darstellung des Objekts 12 zusammengesetzt werden. Dafür werden Positionsinformationen erfasst und ausgewertet. Das Speichern von GPS-Koordinaten zusammen mit einem Digitalbild ist grundsätzlich bekannt, zum Beispiel von Digitalkameras, welche einen GPS-Empfänger umfassen. Solche hier und im Folgenden als numerische Positionsinformationen bezeichneten Positionsinformationen stehen bei der vorliegenden Neuerung nicht im Vordergrund. Entsprechend werden diese nur optional erfasst und ausgewertet. Die bei der hier vorgestellten Neuerung ausgewerteten Positionsinformationen werden zur Unterscheidung von numerischen Positionsinformationen als optische Positionsinformationen bezeichnet. Die Beschreibung wendet sich allerdings zuerst den optionalen numerischen Positionsinformationen zu.

Als numerische Positionsinformation werden optional mittels einer von dem Kamerasystem 10 umfassten Positionserfassungsvorrichtung 26 eine jeweils aktuelle Position des Kamerasystems 10 bei der Aufnahme eines Digitalbilds 16, ein Abstand zum dabei jeweils erfassten Oberflächenabschnitt 24 des Objekts 12 sowie ein Winkel, unter dem die Aufnahme des jeweiligen Digitalbilds 16 erfolgt, ermittelt und zusammen mit dem jeweiligen Digitalbild 16 als numerische Positionsinformation festgehalten. Als Positionserfassungsvorrichtung 26 kommt zum Beispiel ein GPS-Empfänger oder dergleichen in Betracht. Mittels eines GPS-Empfängers sind Daten zur Position des Kamerasystems 10 in einem Raumkoordinatensystem erhältlich. Alternativ kann eine Positionserfassungsvorrichtung 26 auch mittels eines zum Beispiel auf einem Schienensystem bewegten Gestells für das Kamerasystem 10 realisiert werden, wobei ausgehend von einem Startpunkt eine relative Bewegung des Gestells und damit des Kamerasystems 10 insgesamt mittels eines Inkrementalgebers oder dergleichen erfasst wird. Mittels des Inkrementalgebers ist die Position des Kamerasystems 10 in Form einer Distanz zum Startpunkt erhältlich.

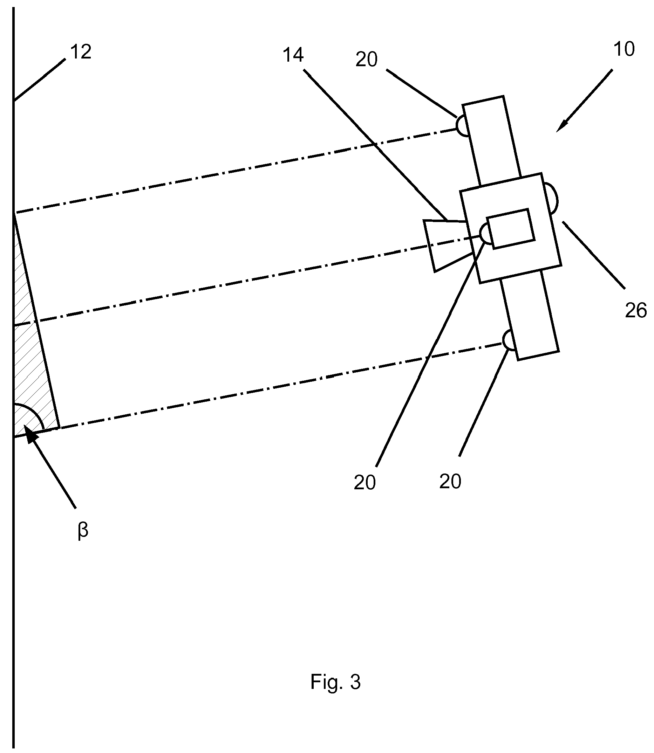

Als Abstand zu einem jeweils aufgenommenen Oberflächenabschnitt 24 wird mittels der im Folgenden zusammenfassend als Abstandssensorik 20 bezeichneten Abstandssensoren 20 eine mittlere Entfernung des Kamerasystems 10 von dem betreffenden Oberflächenabschnitt 24 des Objekts 12 ermittelt. Für jeden Abstandssensor 20 ergibt sich dabei ein Entfernungsmesswert zum jeweils von dem Abstandssensor 20 erfassten Bereich der Oberfläche des Objekts 12. Der Unterschied zwischen dem kleinsten und größten Entfernungsmesswert entspricht genau der Länge einer der Katheten des in **Figur 3** zur Veranschaulichung gezeigten Dreiecks. Die Länge der anderen Kathete dieses Dreiecks ist aufgrund des Abstands der Abstandssensoren 20, mit denen die betreffenden Entfernungsmesswerte ermittelt wurden, am Kamerasystem 10 bekannt. Mittels des Satzes von Pythagoras lässt sich in an sich bekannter Art und Weise die Länge der Hypotenuse berechnen. Damit sind die Längen aller drei Seiten des Dreiecks bekannt und zum Beispiel mittels des Cosinus-Satzes lassen sich die Winkel in dem Dreieck berechnen, unter anderem auch der in der Darstellung mit β bezeichnete Winkel. Dieser Winkel ist der Winkel, unter dem die Aufnahme eines Digitalbilds 16 eines jeweils erfassten Oberflächenabschnitts 24 des Objekts 12 erfolgt.

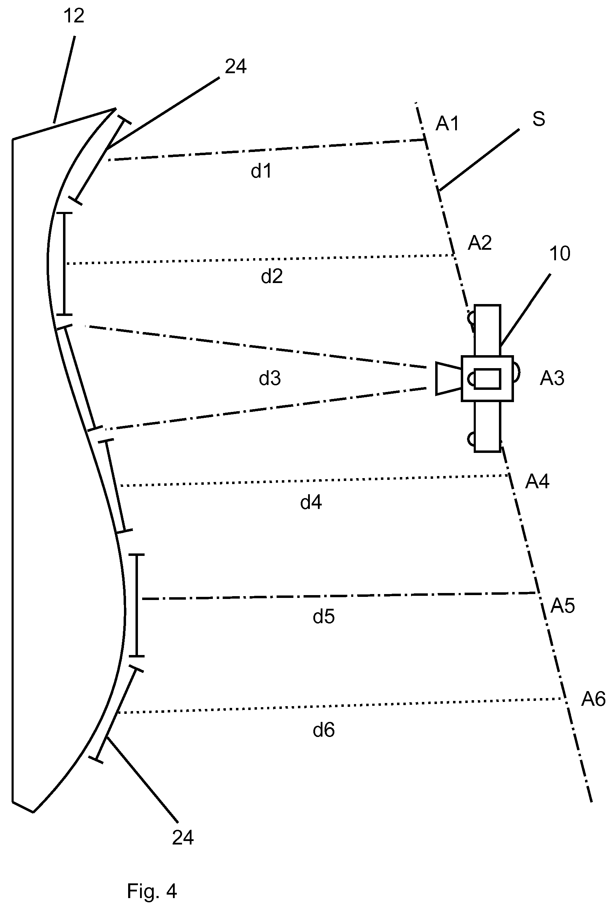

Die Darstellung in **Figur 4** zeigt zur Illustration in einer schematisch vereinfachten Ansicht von oben ein mittels des Kamerasystems 10 abzubildendes Objekt 12. Das Kamerasystem 10 wird zum Abbilden des Objekts 12 entlang eines Wegs S bewegt. Dabei werden nacheinander, zum Beispiel zu äquidistanten Zeitpunkten, Digitalbilder 16 von einem jeweils momentan erfassten Oberflächenabschnitt 24 des Objekts 12 aufgenommen. In der Figur sind die einzelnen Oberflächenabschnitte 24 mit einem Abstand von der Randlinie des Objekts 12 vor der Randlinie gezeigt, um eine Unterscheidbarkeit von der Randlinie zu gewährleisten. Aus Gründen der Übersichtlichkeit sind die einzelnen Oberflächenabschnitte 24 des Weiteren ohne Überlapp gezeigt. In der Praxis werden die einzelnen Oberflächenabschnitte 24 üblicherweise mit Überlapp erfasst, so dass sich auch einander überlappende Digitalbilder 16 ergeben.

Beim Abbilden des Objekts 12 mittels des Kamerasystems 10 wird optional zu jedem aufgenommenen Digitalbild 16 der jeweilige Ort, an dem sich das Kamerasystem 10 bei der Aufnahme befindet, erfasst und aufgezeichnet. In der Darstellung in Figur 4 sind die dortigen Orte mit P1, P2, P3 usw. bezeichnet. Die zugrunde liegenden Daten bilden eine die Position des Kamerasystems 10 zum Zeitpunkt der Aufnahme des jeweiligen Digitalbilds 16 kodierende numerische Positionsinformation. Optional wird zu jedem aufgenommenen Digitalbild 16 als Bestandteil der numerischen Positionsinformation der jeweilige mittlere Abstand des Kamerasystems 10 zu dem von dem Digitalbild 16 jeweils erfassten Oberflächenabschnitt 24 erfasst und aufgezeichnet. In der Darstellung in Figur 4 sind die einzelnen Abstände mit d1, d2, d3 usw. bezeichnet. Weiter optional wird zu jedem aufgenommenen Digitalbild 16 als Bestandteil der numerischen Positionsinformation der Winkel, unter dem die Aufnahme erfolgt ist, erfasst und aufgezeichnet. Die Ermittlung des jeweiligen Winkels erfolgt dabei entsprechend der vorangehenden Erläuterungen im Zusammenhang mit Figur 3. Auch wenn der Weg S hier als gerader Weg gezeigt ist, ist dies ausdrücklich nur als Beispiel zu verstehen. Tatsächlich kommt es auf die geometrische Form des Wegs S nicht an, denn bei einer Erfassung der Abstände und/oder der Winkel wird bzw. werden an jedem Ort P1, P2, P3 usw. der jeweilige Abstand d1, d2, d3 usw. sowie der jeweilige Winkel, unter dem die Aufnahme erfolgt ist, erfasst und aufgezeichnet, so dass bei einem gekrümmten Weg S die resultierenden variierenden Abstände d1, d2, d3 usw. jeweils erfasst werden und optional beim späteren Kombinieren der einzelnen Digitalbilder 16 zur Verfügung stehen. Tatsächlich ist es nicht einmal erforderlich, dass die Digitalbilder 16 während einer kontinuierlichen Bewegung entlang des Wegs S aufgenommen werden. Weil der Ort P1, P2, P3 usw. jeder Aufnahme erfasst wird, kann die Abfolge solcher Orte P1, P2, P3 usw. beliebig sein.

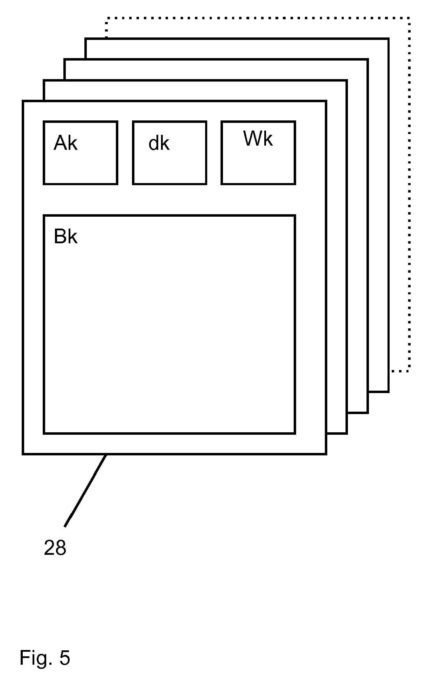

Auf diese Weise entsteht eine Folge von Datensätzen 28 (**Figur 5**) mit Bilddaten Bk (B1, B2 ... Bn) und einer numerischen Positionsinformation, welche zumindest eine Ortsinformation bezüglich des Ortes, an dem sich das Kamerasystem 10 befunden hat, als die Bilddaten Bk aufgenommen wurden (Aufnahmeposition Ak: A1, A2 ... An), eine optionale Abstandsinformation dk (d1, d2 ... dn) bezüglich der Entfernung des Kamerasystems 10 von dem jeweils erfassten Oberflächenabschnitt 24 sowie zusätzlich oder alternativ eine optionale Information zu dem Winkel Wk, unter dem die Aufnahme der Bilddaten Bk erfolgt ist, umfasst. Diese Daten werden einzeln und zusammen als numerische Positionsinformation bezeichnet.

Mit dieser Folge von Datensätzen 28 kann durch geeignete Positionierung und Projektion der Bilddaten Bk entsprechend der Aufnahmeposition Ak, der Abstandsinformation dk und des jeweiligen Winkels Wk mittels eines Computersystems 18 bereits grundsätzlich eine zwei- oder dreidimensionale Darstellung des mittels des Kamerasystems 10 abgebildeten Objekts 12 erzeugt werden. Dies ist aber zum Beispiel dann nicht möglich, wenn von dem jeweils zu untersuchenden Objekt 12 in kurzer Zeit eine große Anzahl von Digitalbildern 16 aufgenommen wird (Hochgeschwindigkeitsaufnahmen) und das Kamerasystem 10 dabei zwischen einer Hochgeschwindigkeitsaufnahme und einer nachfolgenden Hochgeschwindigkeitsaufnahme nur wenig bewegt wird. Dann reichen zum Beispiel GPS-basierte numerische Positionsinformationen als Kriterium für eine positionsrichtige Kombination der von dem Objekt 12 aufgenommenen Digitalbilder 16 nicht aus. Daher werden gemäß dem hier vorgeschlagenen Ansatz als Basis für eine positionsrichtige Kombination der von dem Objekt 12 aufgenommenen Digitalbilder 16 optische Positionsinformationen verwendet und numerische Positionsinformationen nur optional erfasst und ausgewertet. Die nachfolgende Beschreibung wendet sich entsprechend den optischen Positionsinformationen sowie deren Erzeugung und Auswertung zu.

Zunächst zeigt die Darstellung **Figur 6** in schematisch vereinfachter Form einen Ablauf eines Verfahrens zur Inspektion des jeweiligen Objekts 12. Mittels des Kamerasystems 10 werden am Ort des Objekts 12 von diesem Bilddaten in Form einer Mehrzahl einzelner Digitalbilder 16 aufgenommen. Die einzelnen Digitalbilder 16 werden mittels des Kamerasystems 10 zumindest mit einer optischen Positionsinformation kombiniert, optional mit einer optischen Positionsinformation und einer numerischen Positionsinformation, wie dies in der Darstellung in Figur 5 gezeigt ist. Die resultierenden Digitalbilder 16 oder Datensätze 28 werden mittels eines Computersystems 18 verarbeitet. Die Verarbeitung mittels des Computersystems 18 umfasst zumindest das Auswerten der optischen Positionsinformation der einzelnen Digitalbilder 16, optional das Auswerten der optischen Positionsinformation und der numerischen Positionsinformation. Die Auswertung erfolgt mit dem Ziel einer positionsrichtigen Kombination mehrerer Digitalbilder 16 (Zusammensetzen), so dass sich auf Basis einer Vielzahl solcher Kombinationen schließlich eine computergenerierte zwei- oder dreidimensionale Darstellung des Objekts 12 ergibt, wobei die Oberfläche des Objekts 12 mittels der aufgenommenen und zumindest anhand der optischen Positionsinformationen positionsrichtig angeordneten Bilddaten der einzelnen Digitalbilder 16 dargestellt wird. Die computergenerierte zweioder dreidimensionale Darstellung des Objekts 12 kann mittels des Computersystems 18 zum Beispiel gedreht werden und/oder zum Erhalt einer großflächigen Ansicht in einem größeren Abstand oder zur Untersuchung von Details in einer Vergrößerung oder einem geringeren Abstand betrachtet werden.

Die Darstellung in **Figur 7** zeigt eine Ausführungsform eines Kamerasystems 10 zum Zusammensetzen jeweils aufgenommener Digitalbilder 16 eines Objekts 12 zu einer computergenerierten zwei- oder dreidimensionalen Darstellung des jeweiligen Objekts 12. Das Kamerasystem 10 umfasst eine Optik 14 und zumindest eine Strahlquelle 30, insbesondere eine bewegliche Strahlquelle 30, zum Beispiel eine Strahlquelle 30 in Form einer Laserdiode. Die Beweglichkeit der Strahlquelle 30 ergibt sich zum Beispiel, indem die Strahlquelle 30 an einem beweglichen Ausleger 22 des Kamerasystems 10 montiert ist und der Ausleger 22 beim Betrieb des Kamerasystems 10 alternierend um eine Mittellage aufwärts und abwärts schwenkbar ist. Bei mehr als einer Strahlquelle 30 kann sich jede Strahlquelle 30 an einem eigenen Ausleger 22 des Kamerasystems 10 befinden und eine grundsätzlich optionale Bewegung der Ausleger 22 kann synchron oder asynchron sowie mit unterschiedlichen Amplituden und/oder unterschiedlichen Frequenzen erfolgen. Andere Möglichkeiten zur Bewegung der Strahlquelle 30 sind ebenfalls denkbar, zum Beispiel eine im weitesten Sinne taumelnde Bewegung, bei welcher ein von der Strahlquelle 30 ausgesandter Strahl auf einer Projektionsfläche eine Kreisbahn, eine elliptische Bahn oder Abschnitte einer Kreisbahn oder elliptischen Bahn usw. beschreibt.

Wesentlich ist, dass mittels der oder jeder Strahlquelle 30 auf der Oberfläche des zu erfassenden Objekts 12 eine in der Darstellung in **Figur 8** zum Zwecke der Veranschaulichung beispielhaft als sinusartige Welle gezeigte Signatur 32, 34 entsteht. Diese kann als Gesamtbild auf die Oberfläche des Objekts 12 projiziert werden. Dafür ist eine einfache, nicht speziell bewegliche Strahlquelle 30 ausreichend, zum Beispiel eine Strahlquelle 30 in Form von oder nach Art eines Projektors. Eine wie gezeigt linienförmige, dabei aber nicht notwendig kontinuierlich durchgehende Signatur 32, 34 kann auch mittels einer oder mehrerer beweglicher Strahlquellen 30, zum Beispiel Strahlquellen 30 in Form von Laserdioden, auf die Oberfläche des Objekts 12 projiziert werden, indem bei einer zum Beispiel an einem beweglichen Ausleger 22 angebrachten Strahlquelle 30 dieser alternierend um eine Mittellage aufwärts und abwärts verschwenkt wird. Des Weiteren kommt als Strahlquelle 30 zum Beispiel einer Strahlquelle 30 in Form von oder nach Art eines sogenannten Laser-Projektors in Betracht.

Die jeweilige Signatur 32, 34 wird beim Aufnehmen eines Digitalbilds 16 eines jeweils erfassten Oberflächenabschnitts 24 des Objekts 12 ebenfalls abgebildet und ist damit Bestandteil des aufgenommenen Digitalbilds 16 und fungiert als in dem jeweiligen Digitalbild 16 enthaltene Positionsinformation, nämlich als optische Positionsinformation. Bei einem im sichtbaren Spektrum aufzeichnenden Kamerasystem 10 und einer im sichtbaren Frequenzbereich strahlenden Strahlquelle 30 wird eine im sichtbaren Spektrum erkennbare Signatur 32, 34 als optische Positionsinformation Bestandteil des jeweiligen Digitalbilds 16. Bei einem im Infrarotbereich aufzeichnenden Kamerasystem 10 und einer als Strahlquelle 30 fungierenden Laserdiode entsteht die Signatur 32, 34 zum Beispiel aufgrund einer lokalen Erwärmung der Oberfläche des Objekts 12 am jeweiligen Auftreffpunkt des von der Laserdiode ausgesandten Laserstrahls. Weil die Oberfläche nicht unmittelbar wieder abkühlt, wird die resultierende Signatur 32, 34 als optische Positionsinformation Bestandteil eines im Infrarotbereich aufgenommenen Digitalbilds 16.

Beim Aufnehmen einer Vielzahl von Digitalbildern 16 der Oberfläche des jeweiligen Objekts 12 umfasst jedes einzelne Digitalbild 16 zumindest einen Teil einer solchen Signatur 32, 34 als optische Positionsinformation. Weil sich beim Aufnehmen einer Vielzahl von Digitalbildern 16 von der Oberfläche des jeweiligen Objekts 12 die einzelnen Digitalbilder 16 jeweils stückweise überlappen, ergibt sich die Situation, dass zwei oder mehr Digitalbilder 16 einen identischen Abschnitt einer Signatur 32, 34, also eine gleiche optische Positionsinformation oder eine abschnittsweise gleiche optische Positionsinformation, umfassen.

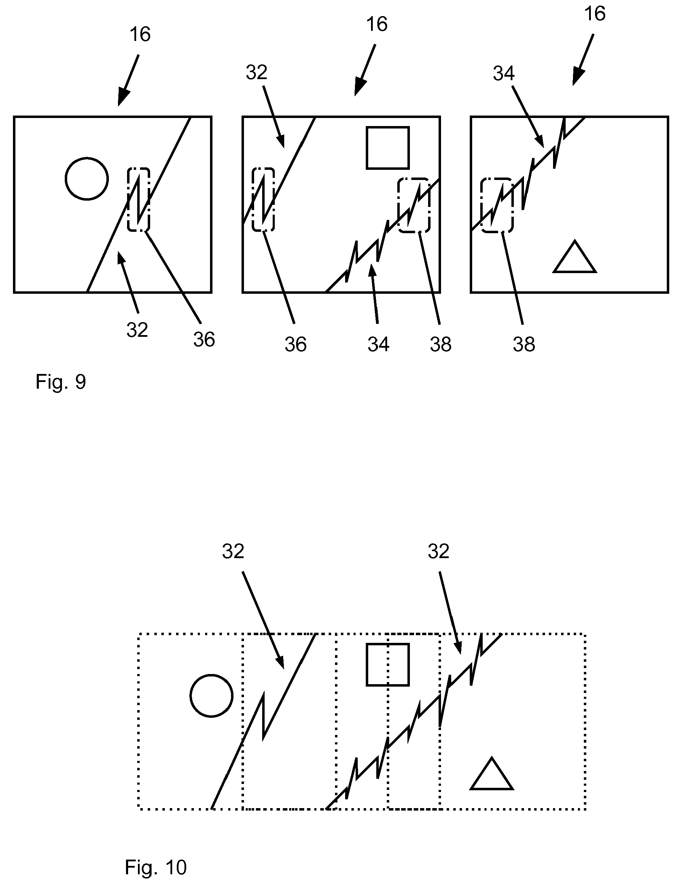

Die Darstellung in **Figur 9** zeigt dazu zur Veranschaulichung mehrere in Bezug auf ein Objekt 12 aufgenommene Digitalbilder 16. Jedes Digitalbild 16 umfasst einen Teil einer mittels einer Strahlquelle 30 temporär auf die Oberfläche des Objekts 12 aufgebrachten (projizierten) Signatur 32, 34. Daneben umfasst jedes Digitalbild 16 selbstverständlich Bilddaten zur aufgenommenen Oberflächenstruktur oder zu sonstigen optisch erkennbaren Eigenschaften des Objekts 12. In der Darstellung in Figur 9 ist dies lediglich exemplarisch durch geometrische Figuren (Kreis, Quadrat, Dreieck) in den einzelnen Digitalbildern 16 veranschaulicht.

Beim Aufnehmen einer Vielzahl von Digitalbildern 16 der Oberfläche des jeweiligen Objekts 12 überlappen sich die einzelnen Digitalbilder 16, so dass Teile der von einem Digitalbild 16 umfassten Signatur 32, 34 auch in einem anderen Digitalbild 16 oder mehreren anderen Digitalbildern 16 enthalten sind. Digitalbilder 16, die aufgrund eines Überlapps identische Oberflächenabschnitte 24 des Objekts 12 abbilden, können mittels eines als "image stitching" oder "feature detection" bezeichneten Verfahrens sowie eines Computerprogramms, welches eine Implementation eines solchen Verfahrens umfasst, automatisch zu einem digitalen Gesamtbild zusammengefasst werden.

Mittels einer hinsichtlich ihrer algorithmischen Realisierung grundsätzlich bekannten Merkmalserkennung (feature detection; zum Beispiel mittels des sogenannten Canny-Algorithmus) werden dazu mittels des Computerprogramms automatisch optische Merkmale 36, 38 eines Digitalbilds 16 identifiziert. Allgemein werden bei der Merkmalserkennung zum Beispiel Kanten eines aufgenommenen Objekts 12 identifiziert. Bei der hier vorgeschlagenen Neuerung werden mittels der Merkmalserkennung der von dem Digitalbild 16 umfasste Abschnitt der Signatur 32, 34 oder ein Teil eines Abschnitts der Signatur 32, 34, also die jeweilige optische Positionsinformation oder ein Teil der optischen Positionsinformation, identifiziert. Ein in einem Digitalbild 16 identifiziertes Merkmal 36, 38 wird automatisch mittels des Computerprogramms mit auf dieselbe Weise in anderen Digitalbildern 16 identifizierten Merkmalen 36, 38 (optischen Positionsinformationen) verglichen. Bei einer Übereinstimmung oder einer ausreichenden Übereinstimmung eines in zwei Digitalbildern 16 identifizierten Merkmals 36, 38 (einer in zwei Digitalbildern 16 identifizierten gleichen oder ausreichend gleichen optischen Positionsinformation) können die betreffenden Digitalbilder 16 automatisch mittels des Computerprogramms überlagert werden (image stitching), indem die jeweiligen Bilddaten so kombiniert werden, dass die in beiden Digitalbildern 16 identifizierten Merkmale 36, 38 zur Deckung kommen. Die Darstellung in **Figur 10** zeigt exemplarisch ein aufgrund einer solchen Kombination einzelner Digitalbilder 16 gemäß Figur 9 erzeugtes Gesamtbild. Dort sind die in Figur 9 gezeigten einzelnen Digitalbilder 16 so kombiniert und überlagert, dass die in jeweils zwei Digitalbildern 16 identifizierten Merkmale 36, 38 zur Deckung kommen, nämlich zum einen die in zwei Digitalbildern 16 vorkommenden und in Figur 9 mit 36 bezeichneten Merkmale sowie zum andern die in ebenfalls zwei Digitalbildern 16 vorkommenden und in Figur 9 mit 38 bezeichneten Merkmale. Auf diese Weise entsteht aus jeweils zwei kombinierten/überlagerten Digitalbildern 16 ein zusammengesetztes Digitalbild.

Das Computersystem 18 und das mittels des Computersystems 18 ausgeführte Computerprogramm übernimmt - wenn man so will - die Funktion eines Spielers, welcher ein Puzzle zusammensetzt und dafür einzelne Puzzleteile kombiniert oder Puzzleteile zu einer bereits bestehenden Kombination einer Mehrzahl von Puzzleteilen hinzufügt. Jedes Digitalbild 16 ist bei dieser Analogie ein Puzzleteil. Zueinander passende Randlinien zweier Puzzleteile sind ein bei den betreffenden Puzzleteilen identifizierbares gemeinsames Merkmal, also eine optische Positionsinformation der betreffenden Puzzleteile. Beim Zusammenfügen der Puzzleteile werden die gemeinsamen Merkmale zur Deckung gebracht, indem die jeweiligen Randlinien formschlüssig aneinander grenzen.

Ein solches aufgrund einer Kombination einzelner Digitalbilder 16 mittels des Computersystems 18 generiertes Gesamtbild stellt einen Teil der Oberfläche der mittels des Computersystems 18 generierten zwei- oder dreidimensionalen Darstellung des jeweiligen Objekts 12 dar. Eine Kombination aller aufgenommenen Digitalbilder 16 oder aller verwertbaren aufgenommenen Digitalbilder 16 stellt die Gesamtoberfläche der computergenerierten Darstellung des Objekts 12 dar.

Optional können die einzelnen Digitalbilder 16 vor der Kombination/Überlagerung zum Beispiel korrigiert werden. Dies erfolgt zum Beispiel auf Basis der weiter oben beschriebenen und bei der Aufnahme eines jeweiligen Digitalbilds 16 mit diesem zu einem Datensatz 28 zusammengefassten numerischen Positionsinformationen. Anhand der von dem jeweiligen Datensatz 28 umfassten Daten, nämlich insbesondere anhand des Abstands dk und des Aufnahmewinkels Wk (siehe Fig. 4 und zugehörige Beschreibung), können einzelne Digitalbilder 16 korrigiert werden, um eine gleichmäßige Ausrichtung aller Digitalbilder 16 und/oder eine Projektion in eine gemeinsame Bildebene zu erreichen.

Zusätzlich oder alternativ kann auch eine von einem solchen Datensatz 28 ggf. umfasste Aufnahmeposition Ak ausgewertet werden. Diese kann bei der automatischen Suche nach Digitalbildern 16, welche aufgrund übereinstimmender Merkmale 36, 38 (optischer Positionsinformationen oder Teile optischer Positionsinformationen) zueinander passen, zur Plausibilitätskontrolle und/oder zur Einschränkung eines jeweiligen Suchraums verwendet werden. Bei einer Verwendung zur Plausibilisierung zweier automatisch anhand übereinstimmender Merkmale 36, 38 als zusammengehörig identifizierter Digitalbilder 16 werden die eine Aufnahmeposition kodierenden numerischen Positionsinformationen der beiden betreffenden Digitalbilder 16 verwendet, um automatisch mittels des Computerprogramms anhand des räumlichen Abstands der jeweiligen Aufnahmepositionen Ak die Plausibilität der Zusammengehörigkeit der betreffenden Digitalbilder 16 bewerten zu können und im Zusammenhang mit der Kombination der Digitalbilder 16 zu bewerten. Bei einem räumlichen Abstand oberhalb eines vorgegebenen oder vorgebbaren Schwellwerts, welcher sich zum Beispiel an einer im Mittel erfassten Länge und/oder Breite eines mit einem einzelnen Digitalbild 16 erfassten Abschnitts des jeweiligen Objekts 12 orientiert, ist davon auszugehen, dass die als zusammengehörig identifizierten Digitalbilder 16 trotz übereinstimmender oder ausreichend übereinstimmender Merkmale 36, 38 tatsächlich nicht zusammengehören. Anstelle der Aufnahmeposition Ak kann optional auch mittels der AufnahmepositionAk, des Abstands dk und des Aufnahmewinkels Wk die Bildposition ermittelt werden und diese für die Plausibilitätskontrolle verwendet werden. Zusätzlich oder alternativ zu einer Plausibilitätskontrolle anhand der Aufnahmeposition oder der Bildposition kann die Aufnahmeposition oder die Bildposition auch zur Eingrenzung des Suchraums bei der Suche nach Digitalbildern 16 mit jeweils übereinstimmenden Merkmalen 36, 38 verwendet werden. Grundsätzlich ist der beim Kombinieren der aufgenommenen Digitalbilder 16 mittels des Computerprogramms zu betrachtende Suchraum durch die Anzahl der insgesamt aufgenommenen Digitalbilder 16 bestimmt, denn theoretisch muss jedes einzelne Digitalbild 16 mit jedem anderen Digitalbild 16 verglichen werden, genauer gesagt muss jedes in einem Digitalbild 16 als optische Positionsinformation identifizierte Merkmal 36, 38 mit den als optische Positionsinformation identifizierten Merkmalen 36, 38 jedes anderen Digitalbilds 16 verglichen werden. Der Rechenaufwand steigt also mit der Anzahl der von dem jeweiligen Objekt 12 insgesamt aufgenommenen Digitalbilder 16 extrem an (kombinatorische Explosion). Diese kombinatorische Explosion lässt sich mittels einer grundsätzlich optionalen Berücksichtigung der numerischen Positionsinformation der einzelnen Digitalbilder 16 vermeiden oder zumindest in handhabbaren Größenordnungen halten. Dabei werden übereinstimmende Merkmale 36, 38 nicht in der Gesamtheit der aufgenommenen Digitalbilder 16, sondern nur in solchen Digitalbildern 16 gesucht, für die sich anhand der numerischen Positionsinformation, nämlich der Aufnahmeposition oder der Bildposition, ein ausreichend geringer räumlicher Abstand ergibt. Die Prüfung auf übereinstimmende Merkmale 36, 38 kann dabei zweistufig erfolgen. Ausgehend von einem ersten Digitalbild 16, in welchem ein zur Kombination mit einem anderen Digitalbild 16 in Frage kommendes Merkmal 36, 38 identifiziert wurde, wird bei jedem in Bezug auf dieses Merkmal 36, 38 zu prüfenden Digitalbild 16 zunächst dessen räumlicher Abstand (bezogen auf die jeweiligen Bildpositionen oder bezogen auf die jeweiligen Aufnahmepositionen) von dem ersten Digitalbild 16 ermittelt. Nur wenn dieser Abstand einen vorgegebenen oder vorgebbaren Schwellwert (welcher sich zum Beispiel an einer im Mittel erfassten Länge und/oder Breite eines mit einem einzelnen Digitalbild 16 erfassten Abschnitts des jeweiligen Objekts 12 orientiert) nicht überschreitet, erfolgt die im Vergleich zur Abstandsermittlung ungleich rechenzeitaufwändigere Merkmalsanalyse in Bezug auf das Vorkommen des in dem ersten Digitalbild 16 identifizierten Merkmals 36, 38.

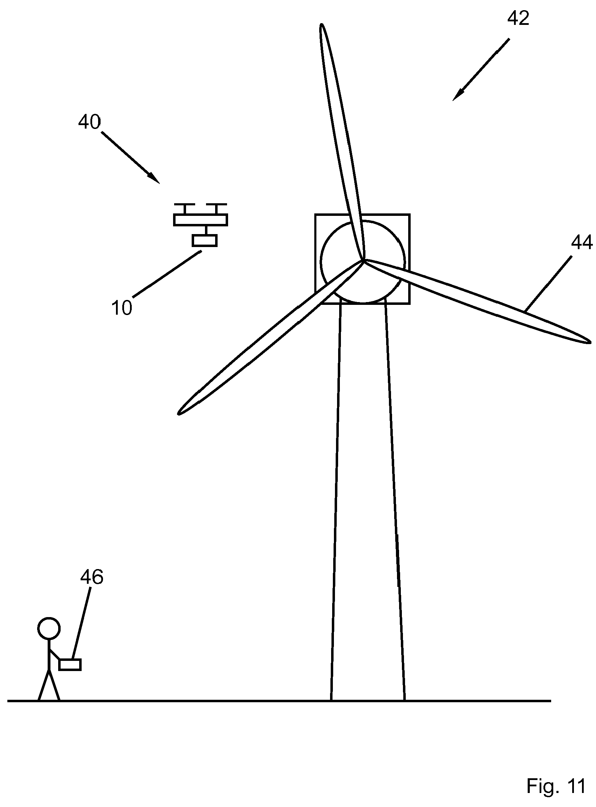

Das Kamerasystem 10 gemäß Fig. 1 / Fig. 2 oder das Kamerasystem 10 gemäß Fig. 7 / Fig. 8 kann an einem bemannten Luftfahrzeug 40, zum Beispiel einem Hubschrauber, oder einem unbemannten Luftfahrzeug 40, zum Beispiel einer sogenannten Drohne, angebracht sein. Die Darstellung in **Figur 11** zeigt insoweit in schematisch vereinfachter Art und Weise ein exemplarisches Anwendungsszenario der hier vorgeschlagenen Neuerung. Ein mittels des an dem unbemannten Luftfahrzeug 40 angebrachten Kamerasystems 10 zu erfassendes Objekt 12 ist zum Beispiel eine Windkraftanlage 42 oder ein Rotorflügel 44 einer Windkraftanlage 42. Als weiteres Beispiel für ein zu erfassendes Objekt 12 kann eine Trag- oder Stützkonstruktion einer technischen Anlage, zum Beispiel eine Trag- oder Stützkonstruktion einer Bohrplattform für den Offshore-Einsatz, genannt werden. Die Anwendbarkeit der hier vorgestellten Neuerung ist allerdings nicht auf diese Beispiele oder auf die Verwendung bemannter oder unbemannter Luftfahrzeuge 40 als Träger des Kamerasystems 10 beschränkt.

Bei der in Figur 11 gezeigten Ausführungsform wird das Luftfahrzeug 40 beim Erfassen des Objekts 12, also zum Beispiel des Rotorflügels 44, von einem Bediener mittels einer Steuerungseinrichtung 46 gesteuert. Während des Flugs entlang des Rotorflügels 44 nimmt das Kamerasystem 10 in der oben beschriebenen Art eine Folge von Digitalbildern 16 einzelner Oberflächenabschnitte 24 des Rotorflügels 44 auf. Die Digitalbilder 16 werden mittels des Kamerasystems 10 mit zumindest einer Positionsinformation, nämlich zumindest mit einer optischen Positionsinformation, versehen. Bei der optischen Positionsinformation handelt es sich zum Beispiel um zumindest eine mittels wenigstens einer Strahlquelle 30 des Kamerasystems 10 auf die Oberfläche des Rotorflügels 44 projizierte Signatur 32, 34. Auf Basis der in allen aufgenommenen Digitalbildern 16 jeweils zumindest abschnittsweise als optische Positionsinformation enthaltenen Signatur 32, 34 erfolgt mittels eines Computersystems 18 das positionsrichtige Zusammensetzen der Digitalbilder 16 zum Erhalt einer computergenerierten zwei- oder dreidimensionalen Darstellung des jeweiligen Objekts 12, also zum Beispiel des Rotorflügels 44. Speziell bei einem solchen Szenario, wenn also das Kamerasystem 10 nicht exakt einer optimalen Bahn folgt, ist eine Korrektur der aufgenommenen Digitalbilder 16 anhand der Daten einer zusätzlich aufgenommenen numerischen Positionsinformation, also zum Beispiel anhand eines Abstands dk oder eines Aufnahmewinkels Wk, sinnvoll.

Einzelne im Vordergrund stehende Aspekte der hier eingereichten Beschreibung lassen sich damit kurz wie folgt zusammenfassen: Die Neuerung ist ein System zur Erfassung von Bilddaten einer Oberfläche eines Objekts 12, wobei das System ein Kamerasystem 10 und ein Computersystem 18 umfasst, wobei mittels des Kamerasystems 10 am Ort des Objekts 12 von diesem Bilddaten in Form einer Mehrzahl einzelner Digitalbilder 16 aufnehmbar sind und im Betrieb aufgenommen werden, wobei mittels des Computersystems 18 die mittels des Kamerasystems 10 aufgezeichneten Bilddaten zu einer zwei- oder dreidimensionalen Darstellung des Objekts 12 kombinierbar sind und zum Erhalt einer solchen Darstellung kombiniert werden, wobei die einzelnen Digitalbilder 16 mittels des Kamerasystems 10 mit einer optischen Positionsinformation kombinierbar sind und beim Betrieb mit einer solchen optischen Positionsinformation kombiniert werden und wobei die optischen Positionsinformationen aller Digitalbilder 16 mittels des Computersystems 18 beim Kombinieren der Digitalbilder 16 zu einer zwei- oder dreidimensionalen Darstellung des Objekts 12 auswertbar sind und zum Erhalt einer solchen Darstellung ausgewertet werden. Die Neuerung ist ebenfalls ein in einem solchen System verwendbares Kamerasystem 10, ein Verfahren zum Betrieb des Kamerasystems 10 sowie ein Verfahren zum Betrieb eines ein solches Kamerasystem 10 und ein solches Computersystem 18 umfassenden Gesamtsystems.

### Bezugszeichenliste

- 10: Kamerasystem
- 12: (abzubildendes) Objekt
- 14: Optik (des Kamerasystems)
- 16: Digitalbild
- 18: Computersystem
- 20: Abstandssensor (am Kamerasystem)
- 22: Ausleger (am Kamerasystem)
- 24: Oberflächenabschnitt (des abzubildenden Objekts)
- 26: Positionserfassungsvorrichtung
- 28: Datensatz
- 30: Strahlquelle (am Kamerasystem)
- 32 ,34: Signatur
- 36, 38: Merkmal
- 40: Luftfahrzeug
- 42: Windkraftanlage
- 44: Rotorflügel
- 46: Steuerungseinrichtung

- S: Weg
- A: Aufnahmeposition
- d: Abstand
- W: Winkel
- B: Bilddaten
- β: Winkel

## Patentansprüche

1. System zur Erfassung von Bilddaten einer Oberfläche eines Objekts (12),
wobei das System ein Kamerasystem (10) und ein Computersystem (18) umfasst,
wobei mittels des Kamerasystems (10) am Ort des Objekts (12) von diesem Bilddaten in Form einer Mehrzahl einzelner Digitalbilder (16) aufnehmbar sind,
wobei mittels des Computersystems (18) die mittels des Kamerasystems (10) aufgezeichneten Bilddaten zu einer zwei- oder dreidimensionalen Darstellung des Objekts (12) kombinierbar sind,
**dadurch gekennzeichnet,**
**dass** das Kamerasystem (10) zumindest eine Strahlquelle (30) umfasst, mittels welcher auf einer Oberfläche des Objekts (12) temporär eine Signatur (32, 34) aufbringbar ist,
**dass** jeweils zumindest ein Teil der Signatur (32, 34) beim Aufnehmen von Bilddaten des Objekts (12) mittels des Kamerasystems (10) erfassbar ist und Bestandteil eines aufgenommenen Digitalbilds (16) wird,
**dass** ein von einem Digitalbild (16) umfasster Abschnitt der Signatur (32, 34) für das jeweilige Digitalbild (16) als optische Positionsinformation fungiert und
**dass** die optische Positionsinformation mittels des Computersystems (18) beim Kombinieren der Digitalbilder (16) zu einer zwei- oder dreidimensionalen Darstellung des Objekts (12) auswertbar sind,
indem mittels des Computersystems (18) ein in einem Digitalbild (16) enthaltener Abschnitt der Signatur (32, 34) oder ein Teil des in dem jeweiligen Digitalbild (16) enthaltenen Abschnitts der Signatur (32, 34) mit Abschnitten der Signatur (32, 34) oder Teilen eines Abschnitts der Signatur (32, 34) in anderen Digitalbildern (16) vergleichbar ist und bei einer Übereinstimmung die betreffenden Digitalbilder (16) kombinierbar sind.

2. System nach Anspruch 1, wobei mittels eines mittels der Strahlquelle (30) im Betrieb ausgesandten Strahls die Oberfläche des Objekts (12) am Auftreffpunkt des Strahls lokal erwärmbar ist und wobei jeweils zumindest ein Teil einer Signatur (32, 34) beim Aufnehmen von Bilddaten des Objekts (12) im Infrarotbereich erfassbar ist.

3. System nach einem der Ansprüche 1 o der 2, wobei die oder jede Strahlquelle (30) am Kamerasystem (10) beweglich angeordnet ist.

4. System nach einem der vorangehenden Ansprüche, wobei die oder jede Strahlquelle (30) am Kamerasystem (10) schenkbeweglich angeordnet ist.

5. System nach Anspruch 3 oder 4, wobei die oder jede beweglich am Kamerasystem (10) angeordnete Strahlquelle (30) beim Betrieb des Kamerasystems (10) auf Basis eines Zufallsgenerators beweglich ist.

6. System nach einem der vorangehenden Ansprüche mit zumindest zwei unabhängigen Strahlquellen (30), wobei mittels jeder Strahlquelle (30) temporär eine eigene Signatur (32, 34) auf der Oberfläche des Objekts (12) aufbringbar ist.

7. System nach einem der vorangehenden Ansprüche, wobei das Kamerasystem (10) eine Positionserfassungsvorrichtung (26) umfasst und wobei eine mittels der Positionserfassungsvorrichtung (26) erhältliche Position des Kamerasystems (10) beim Aufnehmen der einzelnen Digitalbilder (16) als numerische Positionsinformation mit dem jeweiligen Digitalbild (16) kombinierbar ist.

8. System nach Anspruch 7, wobei als numerische Positionsinformation zusätzl ich
eine einen Abstand zwischen dem Kamerasystems (10) und einem jeweils erfassten Oberflächenabschnitt (24) des Objekts (12) kodierende Abstandsinformation und/oder
ein Winkel, unter dem die Aufnahme eines Digitalbilds (16) des jeweils erfassten Oberflächenabschnitts (24) erfolgt,
erfassbar und mit jedem einzelnen Digitalbild (16) kombinierbar sind.

9. System nach Anspruch 8, wobei das Kamerasystem (10) zum Erhalt der Abstandsinformation und/oder des Winkels zumindest drei beabstandet voneinander angeordnete Abstandssensoren (20) umfasst und wobei die zumindest drei Abstandssensoren (20) am Kamerasystem (10) so angeordnet sind, dass zumindest einer der Abstandssensoren (20) einen Abstand von einer zwei Abstandssensoren (20) miteinander verbindenden Linie aufweist.

10. Verfahren zum Betrieb eines Systems nach einem der vorangehenden Ansprüche,
wobei mittels der zumindest einen Strahlquelle (30) des Kamerasystems (10) auf eine Oberfläche des Objekts (12) temporär eine Signatur (32, 34) aufgebacht wird,
wobei jeweils zumindest ein Teil der Signatur (32, 34) beim Aufnehmen von Bilddaten des Objekts (12) mittels des Kamerasystems (10) erfasst und Bestandteil eines aufgenommenen Digitalbilds (16) wird,
wobei ein von einem Digitalbild (16) umfasster Abschnitt der Signatur (32, 34) für das jeweilige Digitalbild (16) als optische Positionsinformation fungiert,
wobei die optische Positionsinformation mittels des Computersystems (18) beim Kombinieren der Digitalbilder (16) zu einer zwei- oder dreidimensionalen Darstellung des Objekts (12) ausgewertet wird,
indem mittels des Computersystems (18) ein in einem Digitalbild (16) enthaltener Abschnitt der Signatur (32, 34) oder ein Teil des in dem jeweiligen Digitalbild (16) enthaltenen Abschnitts der Signatur (32, 34) mit Abschnitten der Signatur (32, 34) oder Teilen eines Abschnitts der Signatur (32, 34) in anderen Digitalbildern (16) verglichen wird und bei einer Übereinstimmung die betreffenden Digitalbilder (16) kombiniert werden.

11. Verfahren nach Anspruch 10, wobei die oder jede Strahlquelle (30) am Kamerasystem (10) beweglich angeordnet ist und beim Aufbringen der Signatur (32, 34) auf die Oberfläche des Objekts (12) bewegt wird.

12. Verfahren nach einem der Ansprüche 10 oder 11, wobei die von dem Objekt (12) aufgenommenen Digitalbilder (16) anhand einer zusammen mit jedem Digitalbild (16) aufgenommenen numerischen Positionsinformation korrigiert werden.

13. Verfahren nach einem der Ansprüche 10, 11 oder 12, wobei zur Kontrolle einer tatsächlichen Zusammengehörigkeit zweier anhand einer übereinstimmenden optischen Positionsinformation, nämlich anhand übereinstimmender Signaturabschnitte (32, 34) oder übereinstimmender Teile von Signaturabschnitten (32, 34), als zusammengehörig ermittelter Digitalbilder (16) eine zusammen mit jedem Digitalbild (16) aufgenommene numerische Positionsinformation ausgewertet wird.

14. Verfahren nach einem der Ansprüche 10, 11, 12 oder 13, wobei zur Begrenzung eines beim Kombinieren der Digitalbilder zu berücksichtigenden Suchraums eine zusammen mit jedem Digitalbild (16) aufgenommene numerische Positionsinformation ausgewertet wird.

15. Verfahren nach einem der Ansprüche 10 bis 14, wobei das Kamerasystem (10) an einem Luftfahrzeug (40) angebracht ist und Digitalbilder (16) des Objekts (12) erfasst werden, indem das Luftfahrzeug (40) entlang des Objekts (12) gesteuert wird, und wobei die mittels des Kamerasystems (10) aufgenommenen Digitalbilder (16) mittels des Computersystems (18) zu einer zwei- oder dreidimensionalen Darstellung des Objekts (12) kombiniert werden.
